# EUROPEAN PATENT APPLICATION

(11) **EP 1 376 392 A2**
(43) Date of publication of application: **02.01.2004**
(21) Application number: 03012432.5
(22) Date of filing: 30.05.2003
(51) Int. Cl.: G06F 17/24, G06F 17/27

(54) **Method and system for associating actions with semantic labels in electronic documents**

(30) Priority: 27.06.2002 US 184298
(71) Applicant: MICROSOFT CORPORATION, Redmond, WA 98052 (US)
(72) Inventor: Reynar, Jeffrey C., Woodinville, WA 98072 (US); Sawicki, Marcin, Kirkland, WA 98034 (US); Jones, Brian M., Redmond, WA 98052 (US); Little, Robert A., Redmond, WA 98053 (US); Pratley, Christopher H., Seattle, WA 98109 (US); Broman, Paul, Renton, WA 98056 (US)
(74) Representative: Grünecker, Kinkeldey, Stockmair & Schwanhäusser Anwaltssozietät

(57) **Abstract**

A method and system are provided for associating actions with semantic labels in an electronic document. The document is created or edited in an application program module and sections of the electronic document are annotated with semantic labels. The application program module passes the semantic labels to an action DLL. The action DLL is responsible for communicating with the application program module, transmitting the labels to action plug-ins, and receiving, from the action plug-ins, the actions to be associated with the labels. The application program module communicates with the action DLL to retrieve the actions associated with the semantic labels and displays them to a user. The document may be created in eXtensible Markup Language (XML) and may be annotated using XML tags. The semantic labels may be associated with strings of text or graphical objects

## Description

### Field of Invention

The present invention relates to a method and system for associating actions with semantic labels in an electronic document.

### Background of the Invention

Electronic documents such as word processing documents, e-mail messages, and spreadsheet documents typically include semantic information which may be recognized as belonging to a particular semantic category and associated with one or more actions relevant to the category. Recognition and use of this semantic information provides increased interoperability between desktop software applications and other desktop applications and/or web-based applications. Exemplary functions, features, and operations may include automatically addressing an e-mail message, performing a look up in a cooperating database, providing a hyperlink to one or more Internet web pages and providing enhanced content.

One current scheme for recognizing strings involves utilizing an application program module to pass a string of text (e.g., a paragraph) entered into an electronic document to a recognizer. The recognizer parses the string for known keywords which are then compiled into semantic categories. Each recognized string is then labeled with the title of the semantic category to which it belongs. For example, when a user types the string "Bob Smith" which is known to the recognizer as a keyword, the recognizer compiles the string into the semantic category labeled "name." After the string has been compiled, the application program module may display to the user a selection of actions associated with the semantic category label in the electronic document. For example, the semantic category label "name" may be associated with the action "Add name to contacts folder."

Independent software developers are often not in the best position to determine all of the semantic information that individual users need to be recognized in electronic documents. Current schemes, however, are limited in that they require strings of text in the electronic document to contain keywords which are known to a recognizer to incorporate semantic category labels and make actions available to the user. That is, if a string of text (e.g., a person's name) does not match a list of keywords known to the recognizer, the string will not be labeled as a semantic category and no actions will be associated with the string. Moreover, current schemes are further limited in that they are unable to recognize and associate actions with non-string data (e.g., images, photos, drawings, and other insertable objects) which may be in a document.

Thus, there is a need for a method and system for allowing actions to be associated with arbitrary strings or other types of content, such as images, photos, drawings and other insertable objects in an electronic document without the need for recognition.

### Summary of the Invention

Illustrative embodiments of the present invention satisfy the above described needs by providing a method and system for associating actions with semantically labeled strings of text or other content without the need for recognition.

In one embodiment, the present invention provides a method for associating actions with semantic labels in an electronic document. When the document is created or edited in an application program module, sections of the electronic document are annotated with semantic labels. In the present embodiment, the document may be created using eXtensible Markup Language (XML) and the semantic labels may be XML tags. The application program module then passes the labels to an action DLL. The action DLL is responsible for communicating with the application program module, transmitting the labels to action plug-ins, and receiving, from the action plug-ins, the actions to be associated with the labels. The application program module communicates with the action DLL to retrieve the actions associated with the semantic labels and displays them to a user. The semantic labels may be associated with strings of text or graphical objects.

These and other features, advantages, and aspects of the present invention may be more clearly understood and appreciated form a review of the following detailed description of the disclosed embodiments and by reference to the appended drawings and claims.

### Brief Description of the Drawings

Fig. 1 is a block diagram of a computer that provides the exemplary operating environment for the present invention.
Fig. 2 is a block diagram illustrating an exemplary architecture for use in conjunction with an embodiment of the present invention.
Fig. 3 is a flow chart illustrating a method for incorporating semantic labels and actions during creation of an electronic document in accordance with an illustrative embodiment of the present invention.
Fig. 4 is a flow chart illustrating a method for associating actions with semantic labels in accordance with an illustrative embodiment of the present invention.

### Detailed Description of Illustrative Embodiments

The present invention is directed toward a method and system for associating actions with semantic labels in an electronic document.

In one embodiment, the invention is incorporated into a suite of application programs referred to as "OFFICE," and more particularly is incorporated into a word processing application program entitled "WORD" and a spreadsheet application program entitled "EXCEL," both marketed by Microsoft Corporation of Redmond, Washington. Briefly described, the application programs allow a user to create and edit electronic documents by entering characters, symbols, graphical objects, and commands.

In one embodiment, the present invention includes associating actions with semantic labels in an electronic document. When the document is created in an application program module, sections of the electronic document are annotated with semantic labels. The application program module then passes the labels to an action DLL. The action DLL is responsible for communicating with the application program module, transmitting the labels to action plug-ins, and receiving, from the action plug-ins, the actions to be associated with the labels. The application program module communicates with the action DLL to retrieve the actions associated with the semantic labels and displays them to a user.

Having briefly described an illustrative embodiment of the present invention, an illustrative operating environment for the present invention is described below.

### Exemplary Operating Environment

Referring now to the drawings, in which like numerals represent like elements throughout the several figures, aspects of the present invention and the exemplary operating environment will be described.

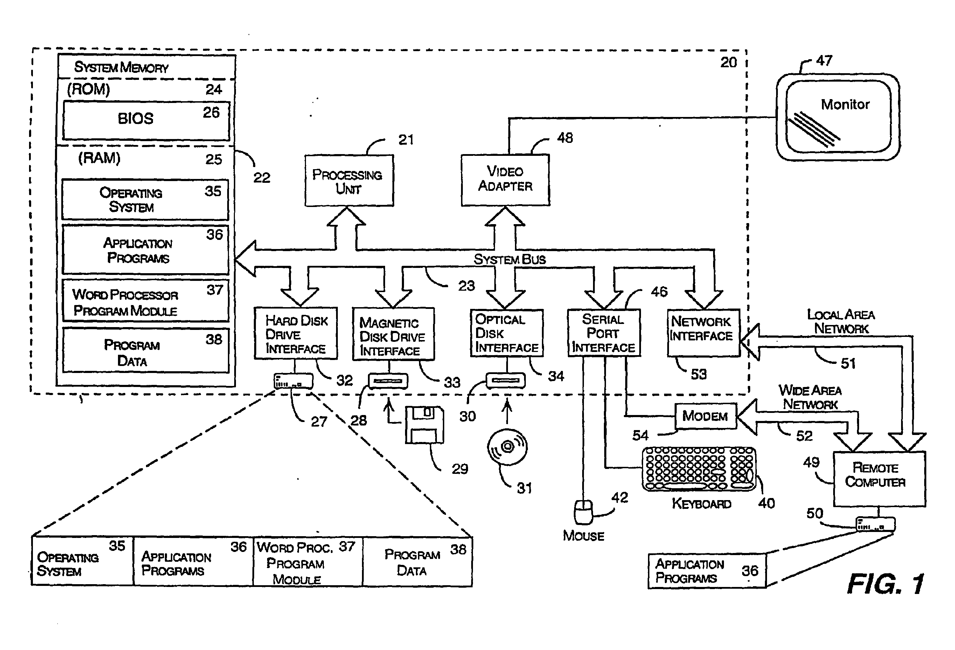

Fig. 1 and the following discussion are intended to provide a brief, general description of a suitable computing environment in which the invention may be implemented. While the invention will be described in the general context of an application program that runs on an operating system in conjunction with a personal computer, those skilled in the art will recognize that the invention also may be implemented in combination with other program modules. Generally, program modules include routines, programs, components, data structures, etc. that perform particular tasks or implement particular abstract data types. Moreover, those skilled in the art will appreciate that the invention may be practiced with other computer system configurations, including hand-held devices, multiprocessor systems, microprocessor-based or programmable consumer electronics, cell phones, minicomputers, mainframe computers, and the like. The invention may also be practiced in distributed computing environments where tasks are performed by remote processing devices that are linked through a communications network. In a distributed computing environment, program modules may be located in both local and remote memory storage devices.

With reference to Fig. 1, an exemplary system for implementing the invention includes a conventional personal computer **20**, including a processing unit **21**, a system memory **22**, and a system bus **23** that couples the system memory to the processing unit **21**. The system memory **22** includes read only memory (ROM) **24** and random access memory (RAM) **25**. A basic input/output system **26** (BIOS), containing the basic routines that help to transfer information between elements within the personal computer **20**, such as during start-up, is stored in ROM **24**. The personal computer **20** further includes a hard disk drive **27**, a magnetic disk drive **28**, e.g., to read from or write to a removable disk **29**, and an optical disk drive **30**, e.g., for reading a CD-ROM disk **31** or to read from or write to other optical media. The hard disk drive **27**, magnetic disk drive **28**, and optical disk drive **30** are connected to the system bus **23** by a hard disk drive interface **32**, a magnetic disk drive interface **33**, and an optical drive interface **34**, respectively. The drives and their associated computer-readable media provide nonvolatile storage for the personal computer **20**. Although the description of computer-readable media above refers to a hard disk, a removable magnetic disk and a CD-ROM disk, it should be appreciated by those skilled in the art that other types of media which are readable by a computer, such as magnetic cassettes, flash memory cards, digital video disks, Bernoulli cartridges, and the like, may also be used in the exemplary operating environment.

A number of program modules may be stored in the drives and RAM **25**, including an operating system **35,** one or more application programs **36**, a word processor program module **37** (or other type of program module), program data **38**, and other program modules (not shown).

A user may enter commands and information into the personal computer **20** through a keyboard **40** and pointing device, such as a mouse **42.** Other input devices (not shown) may include a microphone, joystick, game pad, satellite dish, scanner, or the like. These and other input devices are often connected to the processing unit **21** through a serial port interface **46** that is coupled to the system bus, but may be connected by other interfaces, such as a game port or a universal serial bus (USB). A monitor **47** or other type of display device is also connected to the system bus **23** via an interface, such as a video adapter **48**. In addition to the monitor, personal computers typically include other peripheral output devices (not shown), such as speakers or printers.

The personal computer **20** may operate in a networked environment using logical connections to one or more remote computers, such as a remote computer **49.** The remote computer **49** may be a server, a router, a peer device or other common network node, and typically includes many or all of the elements described relative to the personal computer **20**, although only a memory storage device **50** has been illustrated in Figure 1. The logical connections depicted in Figure 1 include a local area network (LAN) **51** and a wide area network (WAN) **52.** Such networking environments are commonplace in offices, enterprise-wide computer networks, intranets and the Internet.

When used in a LAN networking environment, the personal computer **20** is connected to the LAN **51** through a network interface **53**. When used in a WAN networking environment, the personal computer **20** typically includes a modem **54** or other means for establishing communications over the WAN **52**, such as the Internet. The modem **54**, which may be internal or external, is connected to the system bus **23** via the serial port interface **46**. In a networked environment, program modules depicted relative to the personal computer **20**, or portions thereof, may be stored in the remote memory storage device. It will be appreciated that the network connections shown are exemplary and other means of establishing a communications link between the computers may be used.

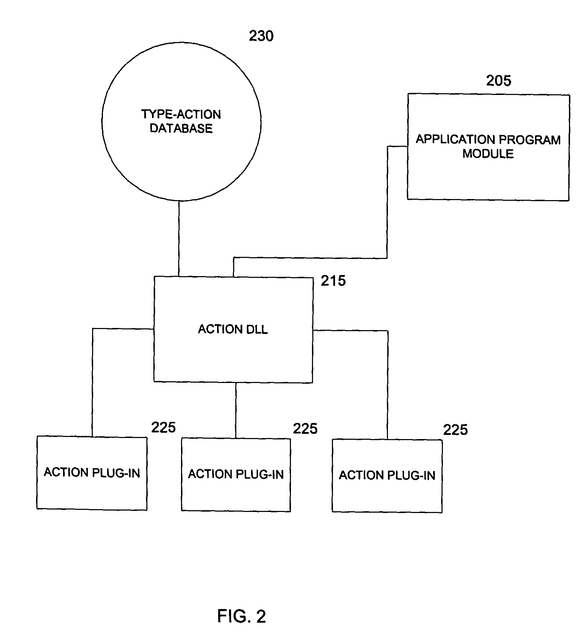

Fig. 2 is a block diagram illustrating an exemplary architecture **200** for use in conjunction with an embodiment of the present invention. The architecture includes an application program module **205,** such as word processor program module **37** (Fig. 1). The application program module **205** is able to communicate with an action dynamic-link library **215** (hereinafter action DLL) as a user is creating, editing, viewing, etc. an electronic document. An action is a user-initiated function applied to a typed string or other content such as images, photographs, or drawings. The action DLL **215** controls a number of action plug-ins **225**. The action DLL also controls a type-action database **230**.

In an illustrative embodiment, the action plug-ins are Automation Servers. Automation Servers are well-known software components which are assembled into programs or add functionality to existing programs running on the Microsoft WINDOWS® operating system. Automation Servers may be written in a variety of computing languages and may be un-plugged from a program at run time without having to recompile the program.

The action DLL **215** manages the action plug-ins **225** that are run to execute the actions. The action plug-ins **225** may be packaged with the application program module **205** or written by third parties to perform particular actions that are of interest to the third party. The action plug-ins provide possible actions to be presented to the user based upon the type label associated with the string or other content. The action DLL **215** determines what type label the semantic category includes and cross-references the type label in the type-action database **230** with a list of actions to determine what actions to present to the user. It should be understood that, in an illustrative embodiment, the type-action database is not used. Instead, the list of actions is dynamically generated for each type by looking in the registry to determine which actions are installed and then querying the action DLLs to determine which types they apply to.

After the user chooses an action, the action DLL **215** manages the appropriate action plug-ins **225** and passes the necessary information between the action plug-ins and the application program module **205** so that the action plug-in may execute the desired action. Typically, the application program module sends the action DLL an automation request to invoke the action the user has selected.

A download URL may be provided with the type labels in case the user's machine has not stored action plug-ins for these type labels. If the user does not have the action plug-in DLL **225** corresponding to a label, then the download URL may be used to navigate the user's web browser to an appropriate website to download this action plug-in. In other implementations of the invention, multiple download URLs may be provided for a single type label.

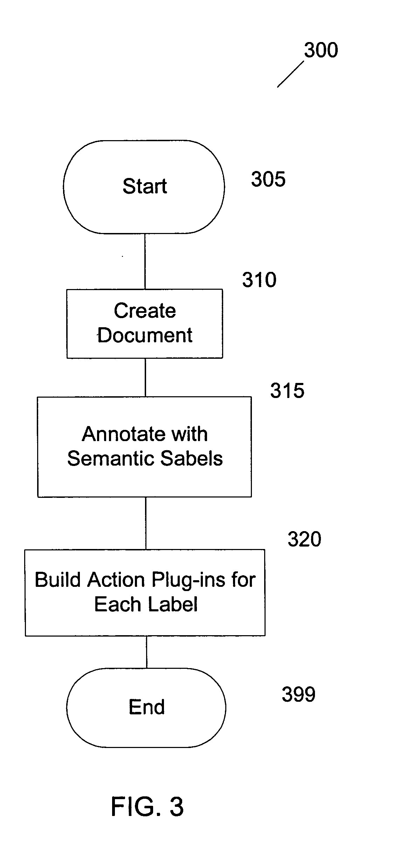

Having described an exemplary architecture, an exemplary method **300** for semantically labeling strings during document creation will be described below in reference to Figs. 2 and 3.

### Method for Incorporating Semantic Labels and Actions during Document Creation

Fig. 3 is a flow chart illustrating a method 300 for incorporating semantic labels and actions during creation of an electronic document. Those skilled in the art will appreciate that this is a computer-implemented process that is carried out by the computer in response to input from the user and instructions provided by a program module. In this embodiment, the user may be a software developer.

Referring to Fig. 3, the method **300** begins at start step **305** and proceeds to step **310** when the developer creates the electronic document in application program module **205**. In one embodiment of the present invention, the document may be in a template format allowing a user to input strings of text, or other content, such as an image, photo or drawing, relevant to the document. For example, if the document is a will template, the document may have sections for the user to input information such as name, place of residence, executor of the estate, and beneficiaries. Or if the document is a news article, the document may have sections for the user to insert a related photo. Or if the document is a business publication, it may have sections for a logo graphical element. In an illustrative embodiment, the electronic document is a word processing document or a spreadsheet document. However, the method is not limited to either of these specific types of electronic documents.

At step **310**, sections of the document are annotated with semantic labels which are to be associated with actions built by the developer. For example, if the document being created is a will template having a section that requests a person's residence and that section is annotated with the semantic label "Place of Residence," then actions for the "Place of Residence" label will be available for that section regardless of the text string input by the user. In one embodiment of the present invention, the document is created in XML and annotated using XML tags to label the document. The XML may be written using any editing tool or XML editing tool. For example, the residence section of the will template would be annotated with the <place of residence> XML element. The method 300 then proceeds to step **315**.

At step **315,** the developer builds action plug-ins **225** to provide and execute the actions for each semantic label (e.g., XML element) in the annotated document. After a string is labeled with a particular semantic label, the user will be able to execute action plug-ins pertaining to that label. For example, for the "Place of Residence" label in a will document, the developer may build actions which provide the user with the option to review the laws relating to wills which are particular to the user's state of residence. The method **300** then ends at step **399.**

### Method for Associating Actions with Semantic Labels

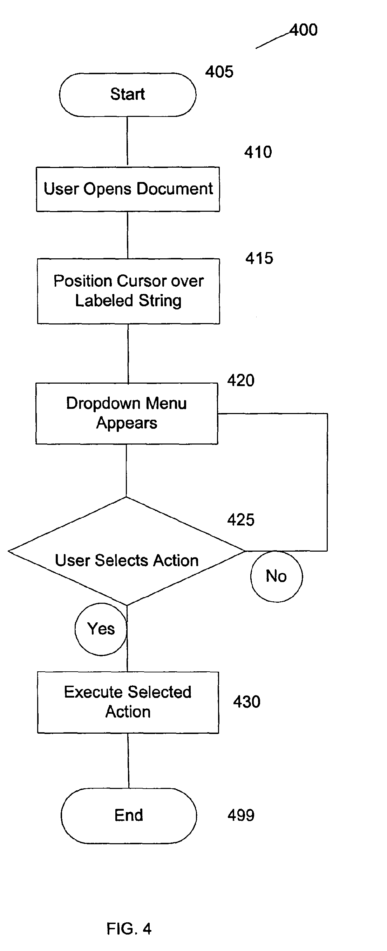

Fig. 4 is a flow chart illustrating a method **400** for associating the created semantic labels with the action plug-ins **225** discussed in Figs. 2 and 3 above. Those skilled in the art will appreciate that this is a computer-implemented process that is carried out by the computer in response to input from the user and instructions provided by a program module.

Referring to Fig. 4, the method **400** begins at start step **405** and proceeds to step **410** when a user opens an electronic document (e.g., the will template described in Fig. 3) in application program module **205**. In one embodiment, the electronic document is a word processing document or a spreadsheet document. However, the invention is not limited to either of these specific types of electronic documents.

At step **415**, the user hovers a cursor over a string or places the insertion point within a string in a section of the document incorporating a semantic label causing a dropdown menu to be displayed to the user in step **420**. The dropdown menu typically displays a list of actions associated with a semantic label. The dropdown menu typically appears above and to the left of the semantic label. For example, if the user types the string "Redmond, Washington" in the section labeled "Place of Residence" the dropdown menu might display an action allowing the user to review the law relating to wills in the state of Washington. It should be understood that the application program module **205** sends a request to the action DLL **215** to determine which actions are shown with each semantic label. The method then proceeds to step **425.**

In one embodiment of the invention, application program module **205** may include the option to display an in-document user interface to indicate the location of a semantic label. This in-document user interface may use a colored indication to indicate the location of a semantic label such as brackets or underlining. For example, if the user types the string "Redmond, Washington" in the section of the document labeled as a semantic category with type label "Place of Residence," the document may look like this with the brackets indicating semantic labeling:

### [Redmond, Washington]

Of course, the in-document user interface may be any sort of indication.

At step **425,** the user is given the option of selecting one of the actions from the dropdown menu displayed in step **415.** If the user does not select an action, the dropdown menu remains displayed until the user positions the cursor or insertion point to another section of the document. If the user does select an action from the dropdown menu (i.e., by clicking on a selection), the method proceeds to step **430**.

At step **430**, after the user has selected an action, the action DLL retrieves the selected action from the appropriate action plug-in. The action plug-ins preferably are COM objects that are executed via communication between the application program module and the action DLL. Parameters necessary to execute the action (the XML markup of the string labeled as being of a particular type, the XML markup of the content representing the current selection) will be passed from the application program module to the action DLL and, in turn, passed to the action plug-in. After an action has been executed, the method returns to step **410** in which the user may reposition the cursor or hover over another semantic label in the document. The method **400** then ends at step **499**.

In another embodiment, actions may be associated with sections of existing documents. For example, a court might receive a legal document, such as a property deed, in electronic form. The property deed may already have a specific structure such as the location of the property, the amount paid, and a description of the property boundaries. A developer may annotate the structure of the document with semantic labels in a particular schema (e.g., XML) and build actions to provide functionality for particular elements of the schema that appear in the document. Thus, an action associated with the location section of the deed may cause a map showing the property to be displayed.

Although the illustrative embodiments of the present invention have been described as implemented in a word processing program module, it should be understood that the present invention may be implemented in other program modules, including, but not limited to, XML authoring programs and programs such as the "POWERPOINT"® presentation graphics program, the "VISIO" diagram drawing program and applications included in the "OFFICE" program module, both marketed by Microsoft Corporation of Redmond, Washington.

The architecture of embodiments of the present invention is designed to allow developers to provide actions for labeled strings or other content such as graphical objects which may include, for example, images, photographs, or drawings. The strings or other content may be associated with actions without the need for recognizer DLLs or recognizer plug-ins which are limited because they are string based and thus do not accurately recognize non-string content. The developer may annotate sections of the document with semantic labels so that the actions will be available no matter what is inserted in the annotated section by the user. The architecture also allows developers to write less code to provide actions since no recognition is required.

It should be understood that illustrative embodiments of the present invention are designed to be able to function without any action plug-in DLLs. For example, if there are no action plug-in DLLs, then the user may be presented with a menu item that allows the user to go to a download site to install an action plug-in DLL.

Although the present invention has been described above as implemented in illustrative embodiments, it will be understood that alternative embodiments will become apparent to those skilled in the art to which the present invention pertains without departing from its spirit and scope. Accordingly, the scope of the present invention is defined by the appended claims rather than the foregoing description.

## Claims

1. For an electronic system for creating and editing an electronic document, a method for associating actions with semantic labels in the electronic document created in an application program module, the method comprising the steps of:
annotating the electronic document with a plurality of the semantic labels;
receiving the plurality of labels in an action dynamic link library;
transmitting the plurality of labels to a plurality of action plug-ins; and
determining, in the action plug-ins, a plurality of actions based on the labels.

2. The method of claim 1, wherein the step of annotating the electronic document with a plurality of semantic labels comprises annotating the electronic document with a plurality of eXtensible Markup Language (XML) elements.

3. The method of claim 1, further comprising displaying the plurality of actions received from the action plug-ins.

4. The method of claim 1, wherein the plurality of actions are predetermined for each of the plurality of labels.

5. A method for associating actions with content in an electronic document as the electronic document is created in an a application program module, the method comprising the steps of:
as the content is entered into the electronic document, associating the content with a semantic label, wherein the electronic document is annotated with a plurality of semantic labels; and
determining a plurality of the actions associated with the label.

6. The method of claim 5, further comprising displaying an indication that the label has been found for the content .

7. The method of claim 6, further comprising the steps of:
determining that a user has selected the content; and
in response, displaying the plurality of actions to the user.

8. The method of claim 5, further comprising the steps of:
receiving an indication that one of the plurality of actions has been selected; and
in response to receiving an indication that one of the plurality of actions has been selected, then causing the application program module to execute the selected action.

9. The method of claim 5, wherein the step of associating the content with a semantic label comprises associating a string of text with the semantic label.

10. The method of claim 5, wherein the step of associating the content with a semantic label comprises associating a graphical object with the semantic label.

11. The method of claim 8, wherein the application program module executes the selected action by determining whether an action plug-in dynamic link library assigned to the action is available; and
if so, then receiving instructions from the action dynamic link library assigned to the selected action.

12. The method of claim 11, further comprising the steps of:
if an action plug-in dynamic link library is not available, then using a Uniform Resource Locator assigned to the action to navigate to a Web site and download the action plug-in dynamic link library.

13. A system for associating actions with semantic labels in an electronic document, the system comprising:
an application program module for annotating the electronic document with a plurality of the semantic labels;
an action dynamic link library connected to the application program module receiving the plurality of labels; and
a plurality of action plug-ins connected to the action dynamic link library for receiving the plurality of labels and determining a plurality of actions based on the labels.

14. The system of claim 11, wherein the semantic labels are eXtensible Markup Language (XML) elements.

15. The system of claim 11 further comprising a display module for receiving and displaying the plurality of actions received from the action plug-ins.

16. For an electronic system for creating and editing an electronic document, a computer-readable medium having computer-executable instructions for associating a plurality of actions with semantic labels in the electronic document created in an application program module, comprising:
annotating the electronic document with a plurality of the semantic labels;
receiving the plurality of labels in an action dynamic link library;
transmitting the plurality of labels to a plurality of action plug-ins; and
determining, in the action plug-ins, the plurality of actions based on the labels and displaying the plurality of actions received from the plurality of action plug-ins.

17. The computer-readable medium of claim 12, wherein annotating the electronic document with a plurality of semantic labels comprises annotating the document with a plurality of eXtensible Markup Language (XML) elements.

18. A computer-readable medium having computer-executable instructions for associating actions with content in an electronic document as the electronic document is created in an a application program module, comprising:
as the content is entered into the electronic document, associating the content with a semantic label, wherein the electronic document is annotated with a plurality of semantic labels; and
determining a plurality of the actions associated with the label;
receiving an indication that one of the plurality of actions has been selected; and
in response to receiving an indication that one of the plurality of actions has been selected, then causing the application program module to execute the selected action.

19. The computer-readable medium of claim 18, wherein associating the text with a semantic label comprises associating the text with an eXtensible Markup Language (XML) element.

20. The computer-readable medium of claim 18, further comprising displaying an indication that the label has been found for the content.

21. The computer-readable medium of claim 18, wherein the application program module executes the selected action by determining whether an action plug-in dynamic link library assigned to the action is available; and
if so, then receiving instructions from the action dynamic link library assigned to the selected action.

22. The computer-readable medium of claim 18, wherein associating the content with a semantic label comprises associating a string of text with the semantic label.

23. The computer-readable medium of claim 18, wherein associating the content with a semantic label comprises associating a graphical object with the semantic label.

24. The computer-readable medium of claim 20, further comprising the steps of:
if an action plug-in dynamic link library is not available, then using a Uniform Resource Locator assigned to the action to navigate to a Web site and download the action plug-in dynamic link library.

25. For an electronic system for creating and editing an electronic document, a method for associating actions with eXtensible Markup Language elements (XML) in the electronic document created in an application program module, the method comprising the steps of:
annotating the electronic document with a plurality of the XML elements;
receiving the plurality of XML elements in an action dynamic link library;
transmitting the plurality of XML elements to a plurality of action plug-ins; and
determining, in the action plug-ins, a plurality of actions based on the XML elements.

26. The method of claim 25, further comprising displaying the plurality of actions received from the action plug-ins.

27. The method of claim 25, wherein the plurality of actions are predetermined for each of the XML elements.
